# EUROPÄISCHE PATENTSCHRIFT

(11) **EP 3 913 342 B1**
(45) Veröffentlichungstag und Bekanntmachung des Hinweises auf die Patenterteilung: **18.03.2026**
(21) Anmeldenummer: 21169584.6
(22) Anmeldetag: 21.04.2021
(51) Int. Cl.: G01K 7/16, H02K 11/25, H02P 29/64, G01K 15/00

(54) **VERFAHREN ZUR STEUERUNG EINES ELEKTROMOTORS EINES ELEKTRISCHEN TÜRANTRIEBSMOTORS UND TÜRANTRIEBSMOTOR**
METHOD FOR CONTROLLING AN ELECTRIC MOTOR OF AN ELECTRIC DOOR DRIVE MOTOR AND DOOR DRIVE MOTOR
PROCÉDÉ DE COMMANDE D'UN MOTEUR ÉLECTRIQUE D'UN MOTEUR D'ENTRAÎNEMENT DE PORTE ÉLECTRIQUE ET MOTEUR D'ENTRAÎNEMENT DE PORTE

(30) Priorität: 20.05.2020 DE 102020113770
(43) Veröffentlichungstag der Anmeldung: 24.11.2021
(73) Patentinhaber: dormakaba Deutschland GmbH, 58256 Ennepetal (DE)
(72) Erfinder: Wagner, Martin, 58256 Ennepetal (DE)
(74) Vertreter: Balder IP Law, S.L.

(56) Entgegenhaltungen:
- EP-A2- 0 284 711
- DE-A1- 102013 109 773
- FR-A1- 3 075 514
- JP-B2- 3 352 911
- US-A1- 2010 002 744
- US-A1- 2012 206 850
- US-A1- 2020 014 326

## Beschreibung

Die vorliegende Erfindung betrifft ein Verfahren zur Bestimmung der Temperatur einer Motorwicklung eines Elektromotors, insbesondere eines elektrischen Türantriebsmotors, sowie einen Türantrieb.

### STAND DER TECHNIK

Beim Betrieb von Elektromotoren führt der durch die Motorwicklungen fließende Strom insbesondere aufgrund von ohmschen Verlusten zu einer Erwärmung der Motorwicklungen. Um eine daraus resultierende Überhitzung und potenzielle Beschädigung des Elektromotors zu verhindern, ist es üblich, ein Energiemanagement des Elektromotors in Abhängigkeit von seiner Temperatur durchzuführen. Im Falle einer drohenden Überschreitung einer kritischen Grenztemperatur werden durch ein solches Energiemanagement temperaturreduzierende Maßnahmen ergriffen. Im Falle eines elektrischen Türantriebsmotors, d.h. eines Elektromotors des Antriebs einer automatischen Türanlage, können derartige temperaturreduzierende Maßnahmen beispielsweise in einer Reduktion der Verfahrgeschwindigkeit der Türflügel oder in einer Verlängerung der Offenhaltezeit der Tür bestehen.

Im Stand der Technik ist es bekannt, die Temperatur der Motorwicklungen von Elektromotoren mittels geeignet angeordneter Temperatursensoren zu bestimmen. Nachteilig an der Verwendung solcher Temperatursensoren ist die inhärente Latenzzeit zwischen der Erwärmung der Motorwicklung aufgrund einer Bestromung und der Erfassung dieser Erwärmung am Ort des Temperatursensors. Aufgrund dieser Latenzzeit ist es nicht möglich, den Elektromotor an seiner Leistungsgrenze zu betreiben, vielmehr ist das Vorhalten einer gewissen Leistungsreserve zur Verhinderung einer überkritischen Erwärmung der Motorwicklung vonnöten. Zudem ist das Bestücken eines Elektromotors mit Temperatursensoren nachteiligerweise mit einer Vergrößerung seines Bauraums verbunden, und diese zusätzliche Sensorik erhöht allgemein die Komplexität und Fehleranfälligkeit des Elektromotors.

FR 3 075 514 offenbart ein Verfahren zur Steuerung eines Elektromotors eines elektrischen Türantriebsmotors, wobei die Temperatur einer Wicklung des Motors mithilfe einer Messung des elektrischen Widerstands der Wicklung bestimmt wird.

### OFFENBARUNG DER ERFINDUNG

Es ist daher die Aufgabe der vorliegenden Erfindung ein Verfahren zur Steuerung eines Elektromotors eines elektrischen Türantriebsmotors vorzuschlagen, wobei das Verfahren eine Bestimmung der Temperatur einer Motorwicklung eines Elektromotors umfasst, welche ohne die Verwendung von separaten Temperatursensoren auskommt.

Diese Aufgabe wird ausgehend von einem Verfahren gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der elektrische Widerstand der Motorwicklung als ein Maß für die Temperatur ermittelt wird.

Die Erfindung geht dabei von dem Gedanken aus, die Temperatur unmittelbar in der Motorwicklung selbst zu ermitteln. Aufgrund seiner ausgeprägten Temperaturabhängigkeit ist der elektrische Widerstand ein dazu geeignetes Maß, welches zudem messtechnisch einfach zugänglich ist. Insbesondere ändert sich der elektrische Widerstand quasi-instantan mit der Temperatur der Motorwicklung, so dass ein auf dem erfindungsgemäßen Verfahren basierendes Energiemanagement keine Latenzzeit der Temperaturbestimmung berücksichtigen muss. Bei Betrieb eines Elektromotors wird üblicherweise eine wohlbekannte elektrische Spannung an die Motorwicklung angelegt und zur Bestimmung des elektrischen Widerstands der Motorwicklung ist folglich eine Bestimmung des fließenden elektrischen Stromes geeignet.

Vorzugsweise wird der Elektromotor dazu mit wenigstens einem Strommesswiderstand bereitgestellt, wobei die Ermittlung des elektrischen Widerstands der Motorwicklung anhand einer Messung des durch den Strommesswiderstand fließenden elektrischen Stroms ausgeführt wird.

Im Detail umfasst das erfindungsgemäße Verfahren in vorteilhafter Ausführungsform wenigstens die folgenden Schritte:
- Bereitstellen des Elektromotors mit wenigstens einem Strommesswiderstand, wobei der Strommesswiderstand in Reihe mit der Motorwicklung geschaltet ist,
- Anlegen einer elektrischen Spannung an die Motorwicklung und Bestimmen der Stromstärke des resultierenden elektrischen Stromes mittels Messens eines Spannungsabfalls über dem Strommesswiderstand,
- Bestimmen des elektrischen Widerstands der Motorwicklung aus dem Quotienten von Spannung zu Stromstärke, und
- Bestimmen der Temperatur der Motorwicklung mittels Zuordnens des Widerstands zu tabellierten Widerstand-Temperatur Wertepaaren.

Das Verfahren basiert demnach auf einer Bestimmung der Stromstärke des elektrischen Stromes, welcher beim Anlegen einer bekannten elektrischen Spannung an die Motorwicklung fließt, und einer anschließenden Berechnung des gesuchten elektrischen Widerstands der Motorwicklung nach Maßgabe des Ohmschen Gesetzes. Zu diesem Zweck wird der Spannungsabfall über einen Strommesswiderstand gemessen, wobei der Strommesswiderstand in Reihe mit der Motorwicklung geschaltet ist, sodass durch Strommesswiderstand und Motorwicklung derselbe Strom fließt. Die Bestimmung der Temperatur der Motorwicklung aus dem elektrischen Widerstand erfolgt mittels Zuordnung zu tabellierten Widerstand-Temperatur Wertepaaren, welche insbesondere im Vorhinein erhoben worden sind, vorzugsweise im Rahmen einer werkseitigen Referenzmessung. Die Bestimmung der Temperatur der Motorwicklung gelingt somit erfindungsgemäß ohne den Einsatz von separaten Temperatursensoren, vielmehr ist lediglich die Integration eines zusätzlichen Strommesswiderstandes in die Schaltung des Elektromotors durchzuführen.

Vorzugsweise werden die tabellierten Widerstandtemperaturwertepaare aus einer werkseitigen Referenzmessung heraus angezogen, wobei der Elektromotor für die Referenzmessung mit wenigstens einem im Bereich der Motorwicklung angeordneten Temperatursensor bereitgestellt und in einer Klimakammer angeordnet wird, und wobei die Referenzmessung eine mehrfache Durchführung der folgenden Schritte umfasst:
- Einstellen einer Umgebungstemperatur in der Klimakammer,
- Messen der Temperatur der Motorwicklung mittels des Temperatursensors,
- Anlegen einer elektrischen Prüfspannung an die Motorwicklung und Bestimmen der Stromstärke des resultierenden elektrischen Stromes mittels Messens des Spannungsabfalls über dem Strommesswiderstand,
- Bestimmen des elektrischen Widerstands der Motorwicklung aus dem Quotienten von Prüfspannung zu Stromstärke, und
- Bilden eines entsprechenden Widerstand-Temperatur Wertepaares.

Eine derartige Referenzmessung ist lediglich einmalig werkseitig durchzuführen und die dabei erhobenen Widerstand-Temperatur Wertpaare können insbesondere in einem dem Elektromotor zugeordneten Speichermedium abgelegt werden. Bei einer Vielzahl von produzierten identischen Elektromotoren ist es dabei beispielsweise nicht notwendig, jedes einzelne Exemplar einer Referenzmessung zu unterziehen, vielmehr kann es ausreichend sein, die Widerstand-Temperatur Wertpaare nur an einem repräsentativen Exemplar zu erheben.

Die Erfindung betrifft des Weiteren ein Verfahren zur Steuerung eines Elektromotors, insbesondere eines elektrischen Türantriebsmotors, wobei der Elektromotor wenigstens eine Motorwicklung umfasst, und wobei das Verfahren auf ein Energiemanagement des Elektromotors in Abhängigkeit von der Temperatur der Motorwicklung ausgerichtet ist. Erfindungsgemäß wird die Bestimmung der Temperatur der Motorwicklung gemäß eines Verfahrens nach einer der vorgenannten Ausführungsformen durchgeführt. Das Energiemanagement schützt den Elektromotor im Betrieb vor Überhitzung und somit potenzieller Beschädigung, wobei dank der Genauigkeit des erfindungsgemäßen Verfahrens zur Bestimmung der Motorwicklungstemperatur der Elektromotor von der Steuerung an der Leistungsgrenze betrieben werden kann.

Erfindungsgemäß wird der Elektromotor als ein bürstenloser, permanenterregter Gleichstrommotor mit drei Motorphasen bereitgestellt, wobei jede Motorphase eine Motorwicklung umfasst, und wobei die Bestimmung der Temperatur für alle Motorphasen gemeinsam oder für jede Motorphase einzeln durchgeführt wird.

Beispielsweise wird die Bestimmung der Temperatur eines Türantriebmotors in einer Endlage durchgeführt, in welcher sich der Türflügel in Ruhe befindet und gegen einen mechanischen Anschlag gedrückt wird. Die dazu notwendige Bestromung des Elektromotors kann mittels des Strommesswiderstands gemessen und somit eine über sämtliche Motorwicklungen gemittelte Temperatur bestimmt werden. Dabei erfolgt allerdings je nach Stellung des Rotors eine unterschiedliche Bestromung der einzelnen Motorphasen, so dass eine entsprechende Ungenauigkeit in der Temperaturermittlung berücksichtigt werden muss.

Erfindungsgemäß wird die Bestimmung der Temperatur sequenziell für jede Motorphase einzeln durchgeführt, wobei eine Prüfspannung je Motorphase als ein periodisches, pulsweitenmoduliertes Signal angelegt wird, wobei das Signal ein Puls-Pausen-Verhältnis von 1 % bis 20 % aufweist. Eine solche individuelle Temperaturbestimmung bietet die Möglichkeit, im Falle einer inhomogenen Erwärmung des Elektromotors das Erreichen einer kritischen Grenztemperatur in ein jeder einzelnen Motorphase zu detektieren bzw. mittels des Energiemanagements zu verhindern. Insbesondere kann dabei auch eine schadhafte Motorphase identifiziert werden. Zudem ist durch den Abgleich der ermittelten Temperaturwerte der einzelnen Phasen eine Plausibilitätsüberprüfung durchführbar. Bei der Bestromung der Motorphasen zum Zwecke der Temperaturbestimmung ist dafür Sorge zu tragen, dass durch das Anlegen einer Prüfspannung der Rotor des Elektromotors und die davon angetriebene Tür nicht in Bewegung versetzt werden. Aus diesem Grund muss ein möglichst kurzes Puls-Pausen-Verhältnis des Prüfsignals gewählt werden, wobei die Spannungspulse ausreichend lang sein müssen, um eine verlässliche Strommessung am Strommesswiderstand zu gewährleisten. Bei einem elektrischen Türantriebsmotor muss die Trägheit des zugehörigen Türflügels zur Bewegungsinitialisierung überwunden werden, und in der Praxis ist ein Puls-Pausen-Verhältnis im Bereich von 1% bis 20% als ein geeigneter Wertebereich identifiziert worden, welcher einerseits eine zuverlässige Strommessung gewährleistet und andererseits nicht zu einem signifikanten Bewegen des Türflügels führt.

In einem nicht erfindungsgemäßen Beispiel kann die Bestimmung der Temperatur für alle Motorphasen gemeinsam durchgeführt werden, wobei der Kommutierungswinkel des Elektromotors derart eingestellt wird, dass der Rotor des Elektromotors nicht in Drehung versetzt wird. Mit dem Kommutierungswinkel ist dabei die Winkellage des Rotors innerhalb einer magnetischen Periode des Elektromotors bezeichnet. Vorteil dieses Beispiels ist es, dass während der Prüfung der Motorwicklungstemperatur keinerlei Rotordrehung stattfindet, so dass bei Anwendung in einem Türantriebsmotor kein Ruckeln oder sonstiges Bewegen eines Türflügels zu befürchten steht. Es wird eine über alle Motorphasen gemittelte Temperatur ermittelt.

Vorteilhafte Weiterbildungen des Verfahrens sind in den abhängigen Verfahrensansprüchen, der Beschreibung und in den Figuren angegeben. Ferner wird die Aufgabe auch durch einen Türantrieb gemäß dem unabhängigen Anspruch 6 gelöst. Vorteilhafte Weiterbildungen des Türantriebs sind ebenfalls in der Beschreibung und in den Figuren angegeben. Insbesondere wird ein Türantrieb unter Schutz gestellt, mit dem das erfindungsgemäße Verfahren, insbesondere das Verfahren nach einem der Ansprüche 1 bis 5 ausführbar ist.

Die Erfindung betrifft damit des Weiteren einen Türantrieb, wenigstens umfassend einen Elektromotor mit wenigstens einer Motorwicklung und einer Steuereinheit zur Steuerung des Elektromotors. Erfindungsgemäß weist die Steuereinheit wenigstens einen Strommesswiderstand auf, der in Reihe mit der Motorwicklung geschaltet ist, wobei die Steuereinheit dazu eingerichtet ist, einen Spannungsabfall über dem Strommesswiderstand zu messen und eine Steuerung des Elektromotors gemäß eines Verfahrens nach einer der vorgenannten Ausführungsformen durchzuführen.

Insbesondere ist der Elektromotor als ein bürstenloser, permanenterregter Gleichstrommotor mit zwei Motorhälften ausgebildet, wobei jede Motorhälfte drei Motorphasen mit jeweils einer Motorwicklung umfasst und wobei die Steuereinheit zwei Strommesswiderstände umfasst, welche mit jeweils einer Motorhälfte in Reihe geschaltet sind. Eine solche Ausbildung mit zwei unabhängigen Motorhälften ist als eine redundante Sicherheitsvorkehrung anzusehen.

Vorzugsweise umfasst der Türantrieb einen Umgebungstemperatursensor mittels welchem bei der Bestimmung der Temperatur der Motorwicklung zusätzlich die Umgebungstemperatur bestimmbar ist. Eine solche Messung der Umgebungstemperatur kann im Zuge des Energiemanagements notwendig sein, um von der ermittelten Temperatur der Motorwicklung einen extrinsischen Teil, beispielsweise durch Sonneneinstrahlung, zu separieren.

### BEVORZUGTES AUSFÜHRUNGSBEISPIEL DER ERFINDUNG

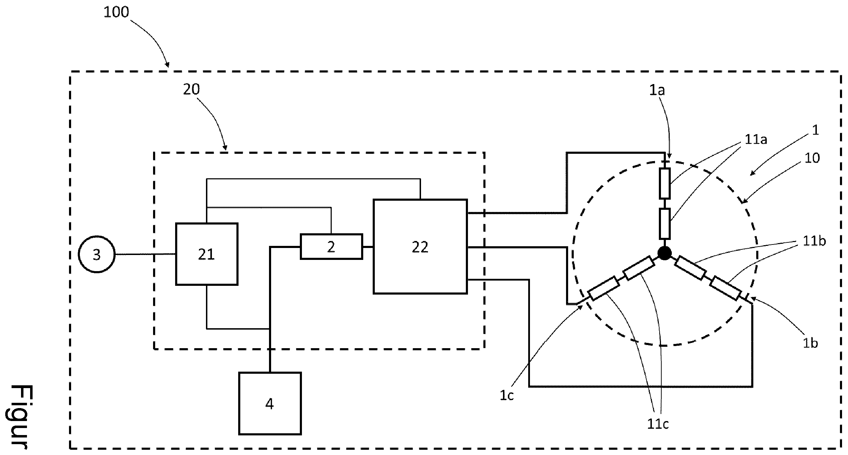

Weitere, die Erfindung verbessernde Maßnahmen werden nachstehend gemeinsam mit der Beschreibung eines bevorzugten Ausführungsbeispiels der Erfindung anhand der Figur näher dargestellt.

Die Figur zeigt eine schematische Darstellung eines erfindungsgemäßen Türantriebs 100 umfassend den Elektromotor 1 mit den drei Motorphasen 1a, 1b, 1c sowie die Steuereinheit 20 zur Steuerung des Elektromotors 1.

Der Elektromotor 1 ist als ein bürstenloser, permanenterregter Gleichstrommotor ausgebildet, wobei die dargestellten Motorphasen 1a, 1b, 1c mit den jeweiligen Motorwicklungen 11a, 11b, 11c den Stator darstellen und der hier nicht dargestellte Rotor mit Permanentmagneten bestückt ist. Insbesondere kann der Elektromotor 1 aus zwei redundanten Motorhälften bestehen, wobei hier der Übersichtlichkeit halber nur eine Motorhälfte dargestellt ist. Jede der drei Motorphasen 1a, 1b, 1c weist zwei Spulen auf, welche gemeinsam jeweils eine Motorwicklung 11a, 11b, 11c bilden. Die drei Motorphasen 1a, 1b, 1c sind in einer Sternschaltung an einem zentralen Sternpunkt zusammengeschaltet und sind über die Steuereinheit 20 mit Spannung beaufschlagbar.

Die Steuereinheit 20 umfasst den Controller 21, den Strommesswiderstand 2 sowie die Endstufe 22. Der Strommesswiderstand 2 ist zwischen die Spannungsquelle 4 und die Endstufe 22 geschaltet und somit in Reihe mit sämtlichen Motorwicklungen 11a, 11b, 11c.

Der Controller 21 ist zur Messung der über dem Strommesswiderstand 2 abfallenden Spannung und zur darauf basierenden Berechnung der Stromstärke und des elektrischen Widerstands der jeweils bestromten Motorwicklungen 11a, 11b, 11c ausgebildet. Bei vorgegebener Spannung U und mittels des Strommesswiderstands 2 ermittelter Stromstärke / bestimmt sich unter Anwendung des Ohmschen Gesetzes der elektrische Gesamtwiderstand des Elektromotors 1 zu R_{gesamt} = *UII*. Dabei stellen die Motorwicklungen 11a, 11b, 11c den größten Beitrag zum Gesamtwiderstand und insbesondere zu dessen Abhängigkeit von der Motorwicklungstemperatur T dar, so dass der gesuchte Widerstand der Motorwicklungen 11a, 11b, 11c bestimmt wird zu R_{Wicklung}(*T*) = *R*_{gesamt}(*T*) - *R*_{Rest}. Die vorbekannte Konstante *R*_{Rest} summiert dabei sämtliche verbleibenden Beiträge wie Zuleitungen, Stecker und Leistungselektronik und wird vereinfachend beispielsweise als temperaturunabhängig verwendet. Erfindungsgemäß wird der derart bestimmte Widerstand der jeweils untersuchten Motorwicklung 11a, 11b, 11c anschließend zur Temperaturbestimmung mit vorbekannten Widerstands-Temperatur Wertepaaren verglichen, welche beispielsweise in einer Speichereinheit des Controllers 21 abgelegt sind. Die so bestimmte Temperatur der Motorwicklungen 11a, 11b, 11c dient dem erfindungsgemäßen Steuerungsverfahren zur Durchführung des Energiemanagements des Elektromotors 1 im Betrieb des Türantriebs 100.

Die Bestimmung der Motorwicklungstemperatur kann in nicht erfindungsgemäßen Beispielen für alle Motorphasen 1a, 1b, 1c gemeinsam, d.h. gemittelt, erfolgen oder erfindungsgemäß sequentiell für jede Motorphase 1a, 1b, 1c einzeln durchgeführt werden.

Eine mittelnde Messung wird dabei vorzugsweise in einer Endstellung des Türantriebs 100 durchgeführt, in welcher der Elektromotor 1 bestromt ist, um den zugehörigen Türflügel gegen einen mechanischen Endanschlag zu drücken. In diesem Fall wird folglich keine separate Prüfspannung angelegt, sondern es wird im ohnehin bestromten Betriebsmodus die erfindungsgemäße Temperaturbestimmung durchgeführt. Dies birgt den Vorteil, dass für die Temperaturbestimmung keine separaten Prüfsequenzen durchgefahren werden müssen, während welcher die zugehörige Türanlage in einen entsprechenden Prüfmodus versetzt werden müsste und beispielsweise nicht öffnen- oder schließbar wäre. Nachteiligerweise ist das geschilderte Vorgehen jedoch mit einer größeren Ungenauigkeit behaftet, da je nach Stellung des Rotors in der Endstellung des Türantriebs 100 eine ungleichmäßige Bestromung der einzelnen Motorphasen 1a, 1b, 1c vorliegen kann, beispielsweise ist eine der Motorphasen 1a, 1b, 1c gänzlich stromlos, so dass eine ungleichmäßige Erwärmung der Motorphasen 1a, 1b, 1c vorliegen kann.

Erfindungsgemäß werden die Motorphasen 1a, 1b, 1c sequenziell paarweise durch Anlegen einer Prüfspannung bestromt, beispielsweise fließt ein Prüfstrom in Motorphase 1a hinein und aus Motorphase 1b hinaus während Motorphase 1c stromlos bleibt, und aus den drei dadurch erhaltenen Widerständen von Motorphasenpaaren wird der Widerstand jeder einzelnen Motorphase 1a, 1b, 1c mittels linearer Algebra berechnet. Das Durchmessen der unterschiedlichen Kombinationen kann dabei auch zeitversetzt auf mehrere Fahrtzyklen des Türantriebs 100 verteilt erfolgen, beispielsweise mit dazwischenliegenden Türöffnungs- oder Türschließvorgängen, um den normalen Betriebsmodus der Türanlage nur möglichst kurzfristig unterbrechen zu müssen. Um ein unerwünschtes Anfahren des Elektromotors 1 möglichst zu unterbinden, werden zur Messung Prüfspannungen in Form von periodischen, pulsweitenmodulierten Signalen mit einem geringen Puls-Pausen-Verhältnis von 1 % bis 20 % an die Motorphasen 1a, 1b, 1c angelegt.

In einer weiteren Ausführungsform des erfindungsgemäßen Verfahrens wird bei der Bestimmung der Motorwicklungstemperatur die Phasenlage der an die Motorphasen 1a, 1b, 1c angelegten Prüfspannungssignale derart gesteuert, dass sich ein solcher Kommutierungswinkel des Elektromotors 1 einstellt, dass der Rotor nicht in Drehung versetzt wird. Die Ansteuerung der Motorphasen 1a, 1b, 1c durch die Steuereinheit 20 muss in Abhängigkeit von der Rotorstellung also derart ausgestaltet sein, dass kein signifikantes Drehmoment auf den Rotor wirkt, was bei einem Kommutierungswinkel um 0° und 180° gegeben ist. Der Vorteil dieses Messprinzips besteht darin, dass der Türantrieb 100 zu keinerlei Bewegung angeregt wird, so dass die Temperaturbestimmung gänzlich unbemerkt von Nutzern der zugehörigen Türanlage vollzogen werden kann.

Der in der Figur dargestellte Türantrieb 100 umfasst des Weiteren den Umgebungstemperatursensor 3, mittels welchem die Umgebungstemperatur in der jeweiligen Einbausituation des Türantriebs 100 bestimmbar ist. Beispielsweise kann aus direkter Sonneneinstrahlung eine erhöhte Grundtemperatur des Elektromotors 1 resultieren, welche als ein Offset in der erfindungsgemäßen Bestimmung der Motorwicklungstemperatur eingeht und im Zuge des Energiemanagements des Elektromotors 1 gegebenenfalls berücksichtigt werden muss. Zudem kann eine mittels des Umgebungstemperatursensors 3 ermittelte Temperatur als Referenzwert dienen, mit welchem eine mittels des erfindungsgemäßen Verfahrens im "kalten" Zustand des Elektromotors 1, d.h. beispielsweise nach Ablauf eines mehrstündigen Zeitraums seit der letzten Betätigung des Türantriebs 100, ermittelte Motorwicklungstemperatur abgeglichen werden kann.

### Bezugszeichenliste

- 100: Türantrieb
- 1: Elektromotor
- 1a, 1b, 1c: Motorphase
- 10: bürstenloser, permanenterregter Gleichstrommotor
- 11a, 11b, 11c: Motorwicklung
- 2: Strommesswiderstand
- 20: Steuereinheit
- 21: Controller
- 22: Endstufe
- 3: Umgebungstemperatursensor
- 4: Spannungsquelle

## Patentansprüche

1. Verfahren zur Steuerung eines Elektromotors (1) eines elektrischen Türantriebsmotors, wobei der Elektromotor (1) wenigstens eine Motorwicklung (11a, 11b, 11c) umfasst, und wobei das Verfahren auf ein Energiemanagement des Elektromotors (1) in Abhängigkeit von der Temperatur der Motorwicklung (11a, 11b, 11c) ausgerichtet ist, wobei zur Bestimmung der Temperatur der wenigstens einen Motorwicklung (11a, 11b, 11c) der elektrische Widerstand der Motorwicklung (11a, 11b, 11c) als ein Maß für die Temperatur ermittelt wird,
wobei der Elektromotor (1) als ein bürstenloser, permanenterregter Gleichstrommotor (10) mit drei Motorphasen (1a, 1b, 1c) bereitgestellt wird, wobei jede Motorphase (1a, 1b, 1c) eine Motorwicklung (11a, 11b, 11c) umfasst, **dadurch gekennzeichnet, dass** die Bestimmung der Temperatur sequentiell für jede Motorphase (1a, 1b, 1c) einzeln durchgeführt wird, wobei eine Prüfspannung je Motorphase (1a, 1b, 1c) als ein periodisches, pulsweitenmoduliertes Signal angelegt wird, wobei das Signal ein Puls-Pausen-Verhältnis von 1% bis 20% aufweist, wodurch bei der Bestromung der Motorphasen (1a, 1b, 1c) zum Zwecke der Temperaturbestimmung dafür Sorge getragen wird, dass durch das Anlegen der Prüfspannung der Rotor des Elektromotors und die davon angetriebene Tür nicht in Bewegung versetzt werden.

2. Verfahren nach Anspruch 1, **dadurch gekennzeichnet, dass** der Elektromotor (1) mit wenigstens einem Strommesswiderstand (2) bereitgestellt wird, wobei die Ermittlung des elektrischen Widerstands der Motorwicklung (11a, 11b, 11c) anhand einer Messung des durch den Strommesswiderstand (2) fließenden elektrischen Stroms ausgeführt wird.

3. Verfahren nach Anspruch 1 oder 2, wenigstens aufweisend die folgenden Schritte:
- Bereitstellen des Elektromotors (1) mit wenigstens einem Strommesswiderstand (2), wobei der Strommesswiderstand (2) in Reihe mit der Motorwicklung (11a, 11b, 11c) geschaltet ist,
- Anlegen einer elektrischen Spannung an die Motorwicklung (11a, 11b, 11c) und Bestimmen der Stromstärke des resultierenden elektrischen Stromes mittels Messens eines Spannungsabfalls über dem Strommesswiderstand (2),
- Bestimmen des elektrischen Widerstands der Motorwicklung (11a, 11b, 11c) aus dem Quotienten von Spannung zu Stromstärke, und
- Bestimmen der Temperatur der Motorwicklung (11a, 11b, 11c) mittels Zuordnens des Widerstands zu tabellierten Widerstand-Temperatur Wertepaaren.

4. Verfahren nach einem der Ansprüche 1 bis 3, **dadurch gekennzeichnet, dass** die tabellierten Widerstand-Temperatur Wertepaare aus einer werkseitigen Referenzmessung herangezogen werden.

5. Verfahren nach einem der vorgenannten Ansprüche, **dadurch gekennzeichnet, dass** der Elektromotor (1) für die Referenzmessung mit wenigstens einem im Bereich der Motorwicklung (11a, 11b, 11c) angeordneten Temperatursensor bereitgestellt und in einer Klimakammer angeordnet wird, und wobei die Referenzmessung eine mehrfache Durchführung der folgenden Schritte umfasst:
- Einstellen einer Umgebungstemperatur in der Klimakammer,
- Messen der Temperatur der Motorwicklung (11a, 11b, 11c) mittels des Temperatursensors,
- Anlegen einer elektrischen Prüfspannung an die Motorwicklung (11a, 11b, 11c) und Bestimmen der Stromstärke des resultierenden elektrischen Stromes mittels Messens des Spannungsabfalls über dem Strommesswiderstand (2),
- Bestimmen des elektrischen Widerstands der Motorwicklung (11a, 11b, 11c) aus dem Quotienten von Prüfspannung zu Stromstärke, und
- Bilden eines entsprechenden Widerstand-Temperatur Wertepaares.

6. Türantrieb (100) wenigstens umfassend einen Elektromotor (1) mit wenigstens einer Motorwicklung (11a, 11b, 11c) und eine Steuereinheit (20) zur Steuerung des Elektromotors (1), wobei dass die Steuereinheit wenigstens einen Strommesswiderstand (2) aufweist, welcher in Reihe mit der Motorwicklung (11a, 11b, 11c) geschaltet ist, wobei die Steuereinheit dazu eingerichtet ist, einen Spannungsabfall über dem Strommesswiderstand (2) zu messen und eine Steuerung des Elektromotors (1) gemäß eines Verfahrens nach einem der Ansprüche 1 bis 5 durchzuführen.

7. Türantrieb (100) nach Anspruch 6, **dadurch gekennzeichnet, dass** der Elektromotor (1) als ein bürstenloser, permanenterregter Gleichstrommotor (10) mit zwei Motorhälften ausgebildet ist, wobei jede Motorhälfte drei Motorphasen (1a, 1b, 1c) mit jeweils einer Motorwicklung (11a, 11b, 11c) umfasst, und wobei die Steuereinheit (20) zwei Strommesswiderstände (2) umfasst, welche mit jeweils einer Motorhälfte in Reihe geschaltet sind.

8. Türantrieb (100) nach Anspruch 6 oder 7, **dadurch gekennzeichnet, dass** der Türantrieb (100) einen Umgebungstemperatursensor (3) umfasst, mittels welchem bei der Bestimmung der Temperatur der Motorwicklung (11a, 11b, 11c) zusätzlich die Umgebungstemperatur bestimmbar ist.

## Claims

1. A method for controlling an electric motor (1) of an electric door drive motor, wherein the electric motor (1) comprises at least one motor winding (11a, 11b, 11c), and wherein the method is orientated towards energy management of the electric motor (1) as a function of the temperature of the motor winding (11a, 11b, 11c), wherein the electrical resistance of the motor winding (11a, 11b, 11c) is determined as a measure of the temperature in order to determine the temperature of the at least one motor winding (11a, 11b, 11c),
wherein the electric motor (1) is provided as a brushless, permanently excited direct current motor (10) with three motor phases (1a, 1b, 1c), wherein each motor phase (1a, 1b, 1c) comprises a motor winding (11a, 11b, 11c), **characterised in that** the determination of the temperature is carried out sequentially for each motor phase (1a, 1b, 1c) individually, wherein a test voltage for each motor phase (1a, 1b, 1c) is applied as a periodic, pulse-width-modulated signal, wherein the signal has a pulse-pause ratio of 1% to 20%, whereby when the motor phases (1a, 1b, 1c) are energised for the purpose of determining the temperature, care is taken to ensure that the rotor of the electric motor and the door driven thereby are not set in motion by the application of the test voltage.

2. The method according to claim 1, **characterised in that** the electric motor (1) is provided with at least one current measuring resistor (2), wherein the electrical resistance of the motor winding (11a, 11b, 11c) is determined on the basis of a measurement of the electrical current flowing through the current measuring resistor (2).

3. The method according to claim 1 or 2, at least having the following steps:
- Providing the electric motor (1) with at least one current measuring resistor (2), wherein the current measuring resistor (2) is connected in series with the motor winding (11a, 11b, 11c),
- Applying an electrical voltage to the motor winding (11a, 11b, 11c) and determining the current strength of the resulting electrical current by measuring a voltage drop across the current measuring resistor (2),
- Determining the electrical resistance of the motor winding (11a, 11b, 11c) from the quotient of voltage to current strength, and
- Determining the temperature of the motor winding (11a, 11b, 11c) by assigning the resistance to tabulated resistance-temperature value pairs.

4. The method according to one of claims 1 to 3, **characterised in that** the tabulated resistance-temperature value pairs are taken from a factory reference measurement.

5. The method according to one of the preceding claims, **characterised in that** the electric motor (1) for the reference measurement is provided with at least one temperature sensor arranged in the region of the motor winding (11a, 11b, 11c) and is arranged in a climatic chamber, and wherein the reference measurement comprises the following steps being carried out multiple times:
- Setting an ambient temperature in the climatic chamber,
- Measuring the temperature of the motor winding (11a, 11b, 11c) by means of the temperature sensor,
- Applying an electrical test voltage to the motor winding (11a, 11b, 11c) and determining the current strength of the resulting electrical current by measuring the voltage drop across the current measuring resistor (2),
- Determining the electrical resistance of the motor winding (11a, 11b, 11c) from the quotient of test voltage to current strength, and
- Forming a corresponding resistance-temperature value pair.

6. A door drive (100) at least comprising an electric motor (1) with at least one motor winding (11a, 11b, 11c) and a control unit (20) for controlling the electric motor (1), wherein the control unit has at least one current measuring resistor (2) which is connected in series with the motor winding (11a, 11b, 11c), wherein the control unit is configured to measure a voltage drop across the current measuring resistor (2) and to carry out control of the electric motor (1) in accordance with a method according to one of claims 1 to 5.

7. The door drive (100) according to claim 6, **characterised in that** the electric motor (1) is in the form of a brushless, permanently excited direct current motor (10) with two motor halves, wherein each motor half comprises three motor phases (1a, 1b, 1c) each with a motor winding (11a, 11b, 11c), and wherein the control unit (20) comprises two current measuring resistors (2) which are each connected in series with one motor half.

8. The door drive (100) according to claim 6 or 7, **characterised in that** the door drive (100) comprises an ambient temperature sensor (3), by means of which the ambient temperature can additionally be determined when determining the temperature of the motor winding (11a, 11b, 11c).

## Revendications

1. Procédé de commande d'un moteur électrique (1) d'un moteur d'entraînement de porte électrique, dans lequel le moteur électrique (1) comprend au moins un enroulement de moteur (11a, 11b, 11c), et dans lequel le procédé est destiné à une gestion d'énergie du moteur électrique (1) en fonction de la température de l'enroulement de moteur (11a, 11b, 11c), dans lequel la résistance électrique de l'enroulement de moteur (11a, 11b, 11c) est déterminée comme une mesure pour la température pour établir la température de l'au moins un enroulement de moteur (11a, 11b, 11c),
dans lequel le moteur électrique (1) est fourni sous la forme d'un moteur à courant continu (10) sans balai, excité en permanence, comportant trois phases de moteur (1a, 1b, 1c), dans lequel chaque phase de moteur (1a, 1b, 1c) comprend un enroulement de moteur (11a, 11b, 11c), **caractérisé en ce que** l'établissement de la température est réalisé de manière séquentielle pour chaque phase de moteur (1a, 1b, 1c) individuellement, dans lequel une tension de test est appliquée à chaque phase de moteur (1a, 1b, 1c) sous la forme d'un signal périodique à modulation de largeur d'impulsion, dans lequel le signal présente un rapport impulsion/pause de 1 % à 20 %, ce qui permet, lors de l'alimentation en courant des phases de moteur (1a, 1b, 1c) en vue de l'établissement de température, de veiller à ce que l'application de la tension de test ne mette pas en mouvement le rotor du moteur électrique et la porte entraînée par celui-ci.

2. Procédé selon la revendication 1, **caractérisé en ce que** le moteur électrique (1) est fourni comportant au moins une résistance de mesure de courant (2), dans lequel la détermination de la résistance électrique de l'enroulement de moteur (11a, 11b, 11c) est effectuée à l'aide d'une mesure du courant électrique circulant à travers la résistance de mesure de courant (2).

3. Procédé selon la revendication 1 ou 2, présentant au moins les étapes suivantes :
- fourniture du moteur électrique (1) comportant au moins une résistance de mesure de courant (2), dans lequel la résistance de mesure de courant (2) est branchée en série avec l'enroulement de moteur (11a, 11b, 11c),
- application d'une tension électrique à l'enroulement de moteur (11a, 11b, 11c) et établissement de l'intensité de courant du courant électrique résultant par le biais d'une mesure d'une chute de tension aux bornes de la résistance de mesure de courant (2),
- détermination de la résistance électrique de l'enroulement de moteur (11a, 11b, 11c) à partir du quotient de la tension par l'intensité de courant, et
- détermination de la température de l'enroulement de moteur (11a, 11b, 11c) par le biais de l'association de la résistance à des paires de valeurs de résistance-température indiquées dans un tableau.

4. Procédé selon l'une des revendications 1 à 3, **caractérisé en ce que** les paires de valeurs de résistance-température indiquées dans un tableau sont utilisées à partir d'une mesure de référence effectuée en usine.

5. Procédé selon l'une des revendications précédentes, **caractérisé en ce que** le moteur électrique (1) est fourni pour la mesure de référence avec au moins un capteur de température agencé dans la zone de l'enroulement de moteur (11a, 11b, 11c) et est agencé dans une chambre climatique, et dans lequel la mesure de référence comprend une réalisation multiple des étapes suivantes :
- réglage d'une température d'environnement dans la chambre climatique,
- mesure de la température de l'enroulement de moteur (11a, 11b, 11c) par le biais du capteur de température,
- application d'une tension de test électrique à l'enroulement de moteur (11a, 11b, 11c) et établissement de l'intensité de courant du courant électrique résultant par le biais d'une mesure de la chute de tension aux bornes de la résistance de mesure du courant (2),
- établissement de la résistance électrique de l'enroulement de moteur (11a, 11b, 11c) à partir du quotient de la tension de test par l'intensité de courant, et
- formation d'une paire de valeurs résistance-température correspondante.

6. Entraînement de porte (100) comprenant au moins un moteur électrique (1) comportant au moins un enroulement de moteur (11a, 11b, 11c) et une unité de commande (20) pour la commande du moteur électrique (1), dans lequel l'unité de commande présente au moins une résistance de mesure de courant (2) qui est branchée en série avec l'enroulement de moteur (11a, 11b, 11c), dans lequel l'unité de commande est destinée à mesurer une chute de tension aux bornes de la résistance de mesure de courant (2) et pour réaliser une commande du moteur électrique (1) selon un procédé selon l'une des revendications 1 à 5.

7. Entraînement de porte (100) selon la revendication 6, **caractérisé en ce que** le moteur électrique (1) est conçu comme un moteur à courant continu (10) sans balais excité en permanence comportant deux moitiés de moteur, dans lequel chaque moitié de moteur comprend trois phases de moteur (1a, 1b, 1c) comportant respectivement un enroulement de moteur (11a, 11b, 11c), et dans lequel l'unité de commande (20) comprend deux résistances de mesure de courant (2) qui sont branchées en série avec respectivement une moitié de moteur.

8. Entraînement de porte (100) selon la revendication 6 ou 7, **caractérisé en ce que** l'entraînement de porte (100) comprend un capteur de température d'environnement (3) par le biais duquel la température d'environnement peut être établie en plus lors de l'établissement de la température de l'enroulement de moteur (11a, 11b, 11c).
